# EUROPEAN PATENT SPECIFICATION

(11) **EP 2 217 538 B1**
(45) Date of publication and mention of the grant of the patent: **30.05.2012**
(21) Application number: 08846912.7
(22) Date of filing: 24.10.2008
(51) Int. Cl.: C03B 27/04, C03B 27/044, C03B 29/08

(54) **METHOD OF HEATING A GLASS PANEL**
VERFAHREN ZUR ERHITZUNG EINER GLASTAFEL
PROCÉDÉ DE CHAUFFAGE D'UNE PLAQUE DE VERRE

(30) Priority: 08.11.2007 FI 20075790
(43) Date of publication of application: 18.08.2010
(73) Proprietor: Uniglass Engineering Oy, 33470 Ylöjärvi (FI)
(72) Inventor: VEHMAS, Jukka, FI-33270 Tampere (FI)
(74) Representative: LEITZINGER OY
(86) International application number: PCT/FI2008/050596
(87) International publication number: WO 2009/060120

(56) References cited:
- EP-A1- 1 491 509
- EP-A1- 1 737 800
- EP-A2- 0 897 896
- EP-A2- 1 241 143
- EP-A2- 1 298 096

## Description

The present invention relates to a method of heating a glass panel, which method comprises conveying the glass panel through a tempering furnace, in which tempering furnace the glass panel is heated by radiation heaters and by overhead convection blasting means extending crosswise of the tempering furnace and capable of drawing hot air from inside the furnace, pressurizing the air and delivering it back onto the glass panel's top surface.

Prior known are tempering furnaces as described above, for example from the Applicant's own application 20030936, wherein the top surface of a glass panel is heated not only with radiation heaters but also by applying the principle of forced convection operating on return air principle. In the cited application, the delivery of convection air to the surface of a glass panel is effected by way of blowpipes extending laterally of a tempering furnace. In other words, the glass panel is heated with successive zones sectioned in a longitudinal direction of the furnace. Indeed, this arrangement enables reusing a considerable portion of the thermal energy and simplifying (making cheaper) the apparatus which includes its own separate air pressurization and heating equipment. To some extent, even the transfer of heating effect to glass can be regulated, but the accuracy and efficiency of regulation are principally determined by radiation heating elements, which is not always sufficient. Improvements described in the application 2003 0936 have been made in view of increasingly popular selective glasses.

A further example is from the Applicant's patent publication FI/EP 0897896, wherein overhead feed pipes are arranged longitudinally and which include electric resistances for heating the chamber. This arrangement provides a comparatively efficient heat regulation across a glass panel, but the arrangement claims plenty of energy as the surface of a glass panel is continuously supplied with fresh air from outside, which also requires continuous heating.

Thus, a need has arisen to provide a method, wherein, regarding especially the heating of selective glass, the heating has a focus more precise and effective than before on a glass panel's top surface (which has the coating of selective glass during heating). Especially in the edge regions of glass (but also in other regions of a glass panel's surface), there is an occasional need for heating which is different from that applied to the rest of a glass panel area because, for reasons relevant to final use, the edges can be stripped of coating. In addition, it is necessary to provide the above-described benefits in such a way that a considerable portion of heating energy can be recycled.

In order to accomplish this above-described objective, a method according to the present invention is characterized in that it comprises heating the glass panel with overhead convection blasting means extending lengthwise of the tempering furnace, whereby air outside the tempering furnace is pressurized, the air is heated by directing it into the tempering furnace, and the heated air is delivered onto the glass panel's top surface, and that the glass panel's top surface is heated with the lengthwise extending overhead convection blasting means for less time and/or in shorter heating periods than with the crosswise directed convection blasting means.

Preferred embodiments of the present invention are presented in the dependent claims.

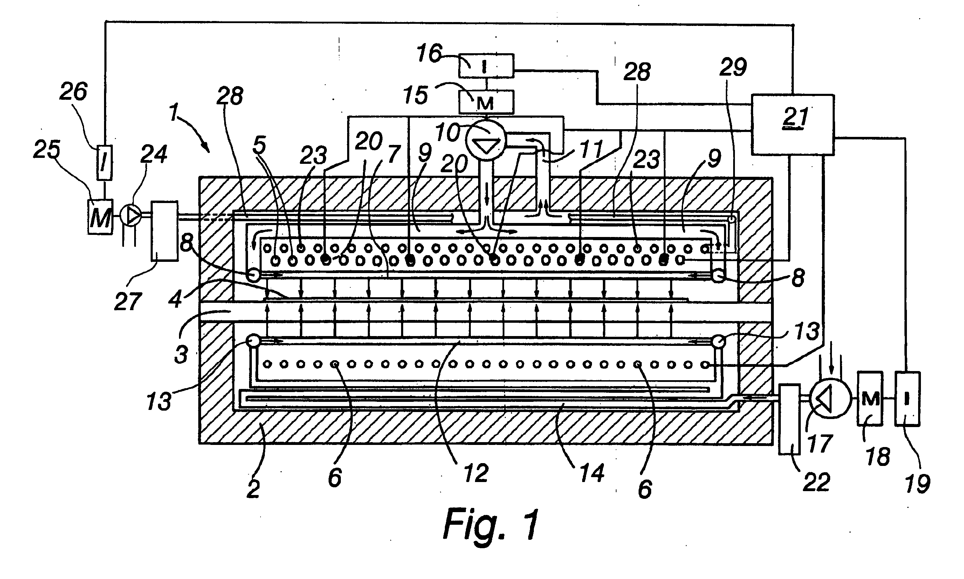

The invention will now be described more closely with reference to the accompanying drawing, in which fig. 1 shows an apparatus applying the method of the invention in a schematic view from the front.

The figure shows a tempering furnace applying the method, designated with reference numeral 1. The furnace 1 includes walls 2, defining a space that can be used for heating a glass panel 4. For this purpose, the furnace 1 is provided with upper radiation heaters 5 and lower radiation heaters 6. Each heater 5 and 6 constitutes preferably its own independently regulable segment.

In addition to this, the furnace 1 is provided with heating equipment for heating the glass panel 4 movable upon rolls 3 from above and from below by a controlled blast of heated 1 air to the glass panel's 4 surface. This heating equipment includes overhead convection heating means, used for blasting convection air to the glass panel's 4 top surface by way of crosswise (crosswise relative to the traveling direction of a glass panel 4) arranged blowpipes 7. The position and exemplary configuration of the blowpipes 7 are described in the Applicant's own application FI 20030936. Hence, the air is blasted by means of the blowpipes 7 to a surface of the glass panel 4. Preferably, each pipe 7 constitutes in a longitudinal direction of the furnace 1 its own independently regulable zone. The blowpipes 7 are supplied with air by way of overhead distribution conduits 8 mounted on either edge of the furnace 1. The distribution conduits 8, on the other hand, are supplied with air by means of an overhead supply duct 9. The supply duct is in communication with a pressurization unit 10 disposed outside the walls 2 of the furnace 1. The pressurization unit 10 draws hot air from inside the furnace 1 along at least one return pipe 11 and compresses the air prior to passing the air into the supply duct 9. In conjunction of the pressurization unit 10 is a drive 15, for example a motor 15 controlled by means of an inverter 16.

Bottom-side crosswise extending blowpipes 12 are supplied with air from bottom-side distribution conduits 13, which are located in a manner similar to the upper distribution conduits 8 in the edge region of the furnace 1. It should be noted at this time that the pipes can also be arranged longitudinally (along the advancing direction of the glass panel 4). The distribution conduits 13 are supplied with air by means of lower supply ducts 14. The supply ducts 14 are adapted to circulate over a distance in a lower section of the furnace 1, whereby the air delivered inside the furnace 1 into the supply ducts 14 has time to warm up. The lower supply duct 14 has air blasted therein by means of a pressurization unit, such as a compressor 17, by way of a pressure tank 22. In conjunction of the lower pressurization unit 17 is also a drive 18, for example a motor 18 controlled by means of an inverter 19.

The apparatus is further provided with thermoelements 20 for measuring air temperature inside the furnace. The thermoelements 20 are in communication with a control unit 21, in which the measuring data can be logged. The measuring data is used as a basis for controlling the radiation heaters 5 and 6 for establishing a desired heating profile. For this purpose, the control unit 21 is also in communication with the radiation heaters 5 and 6, such that the latter are controlled by the control unit 21. Furthermore, the control unit 21 is adapted to control the inverters 16 and 19.

In addition to these, the apparatus applying the method has its furnace 1 provided with convection blasting means, extending lengthwise of the furnace 1 and including elongated side-by-side blowpipes 23 arranged longitudinally of the furnace 1. Preferably, the longitudinal pipes are provided with a spacing (crosswise spacing) relative to each other which is the same as that of the overhead resistances 7, and the longitudinal pipes 23 are most preferably disposed above the overhead resistances 5, in the gaps between the resistances 5. Thus, the overhead resistances 5 can be placed at a correct distance relative to the glass 4. The pipes 23 are provided with jet orifices in two rows (not shown), which preferably enable providing an air jet at an angle of about 15 degrees with respect to the glass panel's 4 surface. Thus, the angle between two air jets is about 30 degrees. Each longitudinal pipe 23 is independently controllable.

According to one preferred embodiment, the longitudinal pipes 23 are divided also in a lengthwise direction into independently regulable segments, which improves the regulability of a final heating profile. The segments (likewise longitudinal pipes) are typically about 1000-2000 millimeters in length, and the number of segments can be two or more, for example four of such segments in succession.

The longitudinal pipes 23 are supplied with air from second overhead distribution conduits 29 which, on the other hand, are supplied with air by way of second overhead supply ducts 28. The supply ducts 28 are adapted to circulate over a distance in an upper section of the furnace 1, whereby the air delivered inside the furnace 1 into the supply ducts 28 has time to warm up. The supply duct is for example 10 meters in length, which is typically sufficient for air to warm up in the duct 28. The air delivered to a glass panel's surface is typically at about 600 degrees or somewhat higher than that, for example at 615-630 degrees.

The overhead supply duct 28 has air blasted therein by means a pressurization unit, such as a compressor 24, by way of a pressure tank 27. In conjunction with the overhead pressurization unit 24 is also a drive 25, for example a motor 25 controlled by means of an inverter 26. This inverter 26 is also controlled by means of the control unit 21. In this case, the equipment for air supply is similar to what has been explained in connection with the crosswise extending lower convection blasting means, with the exception of the longitudinal pipes 23. In this respect, the apparatus for supplying air in a pressurized manner may naturally differ from what has been described.

The present invention enables in an energy-saving manner a focused heating process, which can be regulated at the same time with accuracy sufficient for heating selective glasses.

The following description deals with operation of the furnace 1 by way of example only. First, the glass panel 4 is introduced into the furnace 1 by way of a loading gate, and at the same time the glass size and shape are read by capacitive sensors (not shown). The glass panel 4 has also its position determined. The glass panel 1 is introduced into the furnace 1 on top of the conveyor rolls 3, which transport the glass panel 4 to the other end of the furnace 1. After this, the glass is set to inching slowly towards the loading gate. At this point, the glass is heated with the upper and lower radiation heaters 5 and 6, emitting thermal radiation thereto according to a programmed heating profile. The crosswise extending pipes 7 and 12 are used for feeding air, preferably at a constant pressure. The purpose of this is to provide basic heating to the interior of the furnace 1.

At the same time, the longitudinal overhead blowpipes 23 are used for blasting air to a surface of the glass panel 4. In the event that the glass panel 4 consists of selective glass, whose edge regions have been stripped of coating, the pipes 23 provide a higher-pressure blast on central parts of the glass panel than on its edges. Since the longitudinal blowpipes 23 provide a rapid and focused heat effect, the overheating of edge regions with respect to the coated portion is avoided. At the same time, the crosswise extending convection blasting means, which are upholding the basic heat, circulate the heated air, thus saving heating energy. These qualities (rapid and focused heat effect in combination with energy efficient heating) hence provide a major advantage over the prior art.

While the glass panel 4 is inching on top of the rolls 4, the blasting pressure at heating zones (at crosswise extending blowpipes), where no glass is present, is driven to a minimum for example by the inverters 19, 26. The same applies to the radiation heaters of those segments which have no glass aligned therewith. As the glass panel 4 proceeds into the effective range of each segment, the blasting is activated in this particular zone. Respectively, in those zones from which the glass is driven away, both the convection blasting and the heating with radiation heaters will be stopped.

After the inching process, the glass panel 4 will be oscillated at standard rate from one end of the furnace 1 to the other. Heating of the glass panel 4 proceeds as described above, but the relative effect of radiation heating and convection may fluctuate according to a glass panel-specific heating mode as the heating progresses. Furthermore, the fan-driven crosswise circulation air convection of the upper regions is more or less continuous. The lengthwise compressor-pressurized air is used more intermittently, rapidly, and at a higher capacity. In other words, the glass panel 4 has its top surface heated by the lengthwise extending overhead convection blasting means 23, 24, 25, 26, 27, 28, 29 typically for less time and/or in shorter periods than by the crosswise extending convection blasting means 7, 8, 9, 10, 11, 15, 16. The lengthwise extending overhead convection blasting means 23, 24, 25, 26, 27, 28, 29 have a blasting time which is preferably not more than 80% of that of the crosswise extending overhead convection blasting means 7, 8, 9, 10, 11, 15, 16. Naturally, the heating times can be other than this.

The present invention is not limited to the described embodiment but can be modified in a variety of ways within the scope of protection defined by the claims.

## Claims

1. A method of heating a glass panel (4), which method comprises conveying the glass panel (4) through a tempering furnace (1), in which tempering furnace (1) the glass panel (4) is heated with radiation heaters (5, 6) and overhead convection blasting means (7, 8, 9, 10, 11, 15, 16) extending crosswise of the tempering furnace (1) and capable of drawing hot air from inside the furnace, pressurizing the air and delivering it back onto the glass panel's (4) top surface, **characterized In that** it comprises heating the glass panel (4) with overhead convection blasting means (23, 24, 25, 26, 27, 28, 29) extending lengthwise of the tempering furnace (1), whereby air outside the tempering furnace (1) is pressurized, the air is heated by directing it into the tempering furnace (1) and the heated air is delivered onto the glass panel's top surface, and that the glass panel's (4) top surface is heated with the lengthwise extending overhead convection blasting means (23, 24, 25, 26, 27, 28, 29) for less time and/or in shorter heating periods than with the crosswise directed convection blasting means (7, 8, 9, 10, 11, 15, 16).

2. A method as set forth in claim 1, **characterized in that** the lengthwise extending convection blasting means (23, 24, 25, 26, 27, 28, 29) are divided in a lateral direction of the tempering furnace (1) into a plurality of side-by-side segments for applying at each segment a desired heating effect to the glass panel's (4) top surface.

3. A method as set forth in claim 1 or 2, **characterized in that** the air is adapted to travel in the lengthwise extending convection blasting means (23, 24, 25, 26, 27, 28, 29) over a distance for heating the air to not less than 600°C prior to blasting the air from the convection blasting means (23, 24, 25, 26, 27, 28, 29) into an air space inside the tempering furnace (1).

4. A method as set forth in any of the preceding claims 1-3, **characterized in that** the glass panel's (4) top surface is heated with the lengthwise overhead convection blasting means (23, 24, 25, 26, 27, 28, 29) occasionally at a higher effect than with the crosswise directed convection blasting means (7, 8, 9, 10, 11, 15, 16).

5. A method as set forth in any of the preceding claims 1-4, **characterized in that** the lengthwise extending overhead convection blasting means (23, 24, 25, 26, 27, 28, 29) have a blasting time which is not more than 80% of that of the crosswise directed convection blasting means (7, 8, 9, 10, 11, 15, 16).

## Patentansprüche

1. Verfahren zur Erhitzung einer Glastafel (4), wobei das Verfahren das Befördern der Glastafel (4) durch einen Abschreckofen (1) umfasst, wobei die Glastafel (4) in dem Abschreckofen (1) mit Strahlungsheizungen (5, 6) und obenliegenden Konvektionsluftblasmitteln (7, 8, 9, 10, 11, 15, 16) erhitzt wird, die sich quer zu dem Abschreckofen (1) erstrecken und dazu imstande sind, Heißluft aus dem Inneren des Ofens zu ziehen, die Luft unter Druck zu setzen und sie auf die Oberfläche der Glastafel (4) zurückzuführen, **dadurch gekennzeichnet, dass** es das Erhitzen der Glastafel (4) mit obenliegenden Konvektionsluftblasmitteln (23, 24, 25, 26, 27, 28, 29) umfasst, die sich längs zu dem Abschreckofen (1) erstrecken, wobei Luft von außerhalb des Abschreckofens (1) unter Druck gesetzt wird, die Luft durch Leiten in den Abschreckofen (1) erhitzt wird und die erhitze Luft auf die Oberfläche der Glastafel geführt wird, und dass die Oberfläche der Glastafel (4) über einen kürzeren Zeitraum und/oder in kürzeren Erhitzungsperioden mit den längs verlaufenden Konvektionsluftblasmitteln (23, 24, 25, 26, 27, 28, 29) als mit den quer verlaufenden Konvektionsluftblasmitteln (7, 8, 9, 10, 11, 15, 16) erhitzt wird.

2. Verfahren nach Anspruch 1, **dadurch gekennzeichnet, dass** die längs verlaufenden Konvektionsluftblasmittel (23, 24, 25, 26, 27, 28, 29) in einer Seitenrichtung des Abschreckofens (1) in mehrere nebeneinanderliegende Segmente zum Zuführen einer gewünschten Erhitzungswirkung auf die Oberfläche der Glastafel (4) an jedem Segment unterteilt sind.

3. Verfahren nach einem der Ansprüche 1 oder 2, **dadurch gekennzeichnet, dass** die Luft dazu geeignet ist, in den längs verlaufenden Konvektionsluftblasmitteln (23, 24, 25, 26, 27, 28, 29) über eine Entfernung zum Erhitzen der Luft auf nicht weiniger als 600 °C vor dem Blasen der Luft von den Konvektionsluftblasmitteln (23, 24, 25, 26, 27, 28, 29) in einen Luftraum innerhalb des Abschreckofens (1) zu wandern.

4. Verfahren nach einem der vorhergehenden Ansprüche 1 bis 3, **dadurch gekennzeichnet, dass** die Oberfläche der Glastafel (4) mit den längs verlaufenden, obenliegenden Konvektionsluftblasmitteln (23, 24, 25, 26, 27, 28, 29) gelegentlich mit einer höheren Wirkung als mit den quer verlaufenden Konvektionsluftblasmitteln (7, 8, 9, 10, 11, 15, 16) erhitzt wird.

5. Verfahren nach einem der vorhergehenden Ansprüche 1 bis 4, **dadurch gekennzeichnet, dass** die längs verlaufenden, obenliegenden Konvektionsluftblasmittel (23, 24, 25, 26, 27, 28, 29) eine Blaszeit aufweisen, die nicht mehr als 80% als jene der quer verlaufenden Konvektionsluftblasmittel (7, 8, 9, 10, 11, 15, 16) beträgt.

## Revendications

1. Procédé de chauffage d'une plaque de verre (4), lequel procédé comprend le transport de la plaque de verre (4) à travers un four de trempe (1), dans lequelfour de trempe (1), la plaque de verre (4) est chauffée avec des chauffages à rayonnement (5, 6) et des moyens de projection à convection aériens (7, 8, 9, 10, 11, 15, 16) s'étendant à la transversale du four de trempe (1) et capables d'extraire de l'air chaud depuis l'intérieur du four, de pressuriser l'air et de le fournir sur la face supérieure de la plaque de verre (4), **caractérisé en ce qu'**il comprend le chauffage de la plaque de verre (4) avec des moyens de projection à convection aériens (23, 24, 25, 26, 27, 28, 29) s'étendant en longueur du four de trempe (1), par lesquels l'air hors du four de trempe (1) est pressurisé, l'air est chauffé en le dirigeant vers l'intérieur du four de trempe (1) et l'air chauffé est fourni sur la face supérieure de la plaque de verre, et **en ce que** la face supérieure de la plaque de verre (4) est chauffée avec les moyens de projection à convection aériens (23, 24, 25, 26, 27, 28, 29) s'étendant en longueurpendant moins de temps et/ou pendant des périodes de chauffage plus courtes qu'avec les moyens de projection à convection aériens (7, 8, 9, 10, 11, 15, 16) dirigés transversalement.

2. Procédé selon la revendication 1, **caractérisé en ce que** lesmoyens de projection à convection aériens (23, 24, 25, 26, 27, 28, 29) s'étendant en longueur sont divisés dans une direction latérale du four de trempe (1) en une pluralité de segments côte à côte pour appliquer sur chaque segment un effet de chauffage souhaité sur la face supérieure de la plaque de verre (4).

3. Procédé selon la revendication 1 ou 2, **caractérisé en ce que** l'air est adapté pour voyager dans lesmoyens de projection à convection aériens (23, 24, 25, 26, 27, 28, 29)s'étendant en longueur, sur une distance pour chauffer l'air qui n'est pas inférieure à 600°C avant de projeter l'air depuis les moyens de projection à convection aériens (23, 24, 25, 26, 27, 28, 29)dans un espace d'air à l'intérieur du four de trempe (1).

4. Procédé selon l'une quelconque des revendications précédentes 1 à 3, **caractérisé en ce que** la face supérieure de la plaque de verre (4) est chauffée avec les moyens de projection à convection aériens (23, 24, 25, 26, 27, 28, 29)s'étendant en longueur,de temps en temps à un effet plus élevé que les moyens de projection à convection aériens (7, 8, 9, 10, 11, 15, 16) dirigés transversalement.

5. Procédé selon l'une quelconque des revendications précédentes 1 à 4, **caractérisé en ce que** les moyens de projection à convection aériens (23, 24, 25, 26, 27, 28, 29)s'étendant en longueur, ont une durée de projection qui n'est pas plus de 80% de celle des moyens de projection à convection aériens (7, 8, 9, 10, 11, 15, 16) dirigés transversalement.
